# EUROPÄISCHE PATENTSCHRIFT

(11) **EP 0 860 930 B1**
(45) Veröffentlichungstag und Bekanntmachung des Hinweises auf die Patenterteilung: **28.04.2004**
(21) Anmeldenummer: 98102395.5
(22) Anmeldetag: 12.02.1998
(51) Int. Cl.: H02K 3/00

(54) **Elektromotor für eine Pumpe oder einen Lüfter**
Electric motor for a pump or a fan
Moteur électrique pour une pompe ou un ventilateur

(30) Priorität: 17.02.1997 DE 19705974
(43) Veröffentlichungstag der Anmeldung: 26.08.1998
(60) Teilanmeldung: 04003590.9
(73) Patentinhaber: WILO AG, 44263 Dortmund (DE)
(72) Erfinder: Kech, Hansjürgen, 58313 Herdecke (DE); Genster, Albert, 45768 Marl (DE); Dreihaus, Uwe, 59067 Hamm (DE)
(74) Vertreter: COHAUSZ DAWIDOWICZ HANNIG & PARTNER

(56) Entgegenhaltungen:
- US-A- 2 445 986
- US-A- 4 852 245
- US-A- 5 280 210

## Beschreibung

Die Erfindung betrifft einen Elektromotor mit einem Wicklungträger für die Wicklungen des Motorenstators, wobei der Wicklungsträger einen zylindrischen koaxialen Hohlraum aufweist, der an der Endseite (16) zumindest teilweise geschlossen und an der gegenüberliegenden Endseite (14) offen ist, und wobei durch die offene Endseite der Rotor (5) in den Hohlraum hineinreicht. Solche Elektromotoren mit Innenläufer sind bekannt. Bei diesen bekannten Elektromotoren sind Herstellung und Montage der Statorwicklungen und des gesamten Motors aufwendig.

Ein Elektromotor mit den in Oberbegriff von Anspruch 1 zusämmengefaßten Merkmalen ist in US 2 445 986 offenbart.

Aufgabe der Erfindung ist es, einen Elektromotor der eingangs genannten Art so zu verbessern, daß bei einer modularen Bauweise der Wicklungsträger mit seinen Wicklungen einfach herstellbar, montierbar und auswechselbar ist. Auch soll eine gute Kühlung des Motors erreicht werden. Ferner soll eine Montage durch Automaten möglich sein.

Diese Aufgabe wird erfindungsgemäß durch die Merkmale von Anspruch 1 gelöst.

Ein solcher Wicklungsträger ist besonders einfach herstellbar und montierbar. Die einzelnen etwa oval ausgeführten vorgewickelten Wicklungen brauchen nur von außen radial auf den Träger aufgeschoben zu werden.

Bei Spaltrohrmotoren trägt der Wicklungsträger die vollständige Statorwicklung und kann mit dieser auf den Spalttopf aufgeschoben werden. Damit lassen sich vorgefertigte Wicklungen für unterschiedliche Spannungen automatisch auf dem Spalttopf montieren, Wicklungen lassen sich nachträglich ändern oder Wicklungen im Fehlerfall leicht tauschen. Bei einem metallischen Spalttopf sind die auf dem Wicklungsträger angeordneten Wicklungen (Spulen) gegen diesen elektrisch so isoliert, daß gleichzeitig durch die segmentförmige Gestaltung der Oberfläche (Kühlkanäle) des Wicklungsträgers eine sehr gute Wärmeabfuhr zum Fördermedium im Spalttopf ermöglicht wird.

Handelt es sich um die Ausführung eines Spalttopfes aus Kunststoff muß der Wicklungsträger nicht als eigenständiges Teil auf diesem montiert werden, sondern kann unter Beibehaltung seiner Oberfläschengeometrie auch direkt als Spalttopf ausgebildet sein; d.h. es ist nur ein einziges Kunststoffspritzteil erforderlich.

Bei Pumpenmotoren in Trockenläuferbauweise dient der Wicklungsträger gleichzeitig als vorderer -und hinterer Lagerträger. Die segmentförmige Oberfläche des Wicklungsträgers bildet sogenannte Kühlkanäle zwischen den Wicklungsstellen. Die Rotation des Rotors bewirkt, da mit Hilfe der Kühlkanäle das Kühlmedium (Luft) direkt durch die Wicklungen strömt. Bei geschlossenen nicht oberflächenbelüfteten Motoren läßt sich damit ein innerer Kühlkreislauf aufbauen, mit dem die Maschine gekühlt wird. Durch entsprechende Gestaltung der stirnseitigen Rotorgeometrie (angespritzte Stege, Lüfter) kann die Kühlwirkung noch verstärkt werden.

Besonders vorteilhaft ist es, wenn die zumindest zum Teil geschlossene Endseite die elektrischen Anschlüsse für die Enden der Wicklungsdrähte trägt.

Hierbei können die Anschlußteile als Steckkontakte ausgebildet sein, in die Anschlußverbindungen wie die der Motor- und Steuerelektronik und/oder die Netzanschlußverbindungen kontaktierbar sind. Damit sind beim Wicklungsträger die Anschlußteile als Steckkontakte ausgebildet, in die die modular aufgebaute Motor- und Steuerelektronik sowie die Netzanschlußverbindung kontaktiert werden kann. Zusätzliche Schaltverbindungen zwischen Wicklung und Motorelektronik (Kommutierungselektronik) wie bei klassischen Motoraufbauten bekannt, können somit entfallen. Die geometrische Gestaltung des Wicklungsträgers ermöglicht die genaue Position von Zusatzelementen wie z. B. Wicklungsschutz (PCTs') oder zusätzlichen Sensoren (Hallgeber, Temperaturfühler...); die Anschlußenden dieser Elemente können in gleicher Form wie die Wicklungsenden an einer zentraler Kontaktleiste im Wicklungsträger angeordnet werden.

Besonders vorteilhaft ist es hierbei, wenn in die Stirnseite des Motorgehäuses, die dem Pumpen-oder Lüfterlaufrad abgewandt ist, von außen koaxial ein elektrisches Anschlußmodul einschiebar ist, das elektrische Anschlußteile und elektronische Bauteile aufweist. Von Vorteil ist, wenn die zwischen den Wicklungen liegenden Stäbe Trennwände zwischen den Wicklungen bilden. Auch können die Vorsprünge tragenden Stäbe außerhalb des jeweiligen Vorsprungs weniger weit in radialer Richtung nach außen vorstehen als die Stäbe, die die Trennwände bilden. Ferner können die Vorsprünge einen nach außen sich öffnenden Hohlraum bilden, in den ein Führungsfinger für die automatische Wicklungsmontage steckbar ist.

Ausführungsbeispiele der Erfindung sind in den Zeichnungen dargestellt und werden im folgenden näher beschrieben.
Es zeigen:
- Figur 1: einen axialen Schnitt durch eine einen Spalttopf aufweisende Motorkreiselpumpe im demontierten Zustand,
- Figur 2: eine schematische Darstellung durch eine Motorkreiselpumpe mit Spalttopf,
- Figur 3: eine schematische Darstellung durch einen Lüfter,
- Figur 4: eine Ansicht der teilweise geschlossenen Endseite des Wicklungsträgers ohne Wicklungen,

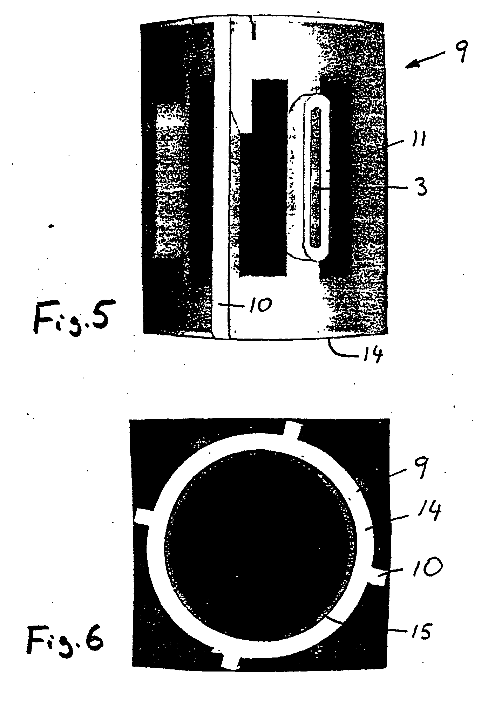

- Figur 5: eine Seitenansicht des Wicklungsträgers ohne Wicklungen,
- Figur 6: eine Ansicht der offenen Endseite des Wicklungsträgers ohne Wicklungen.

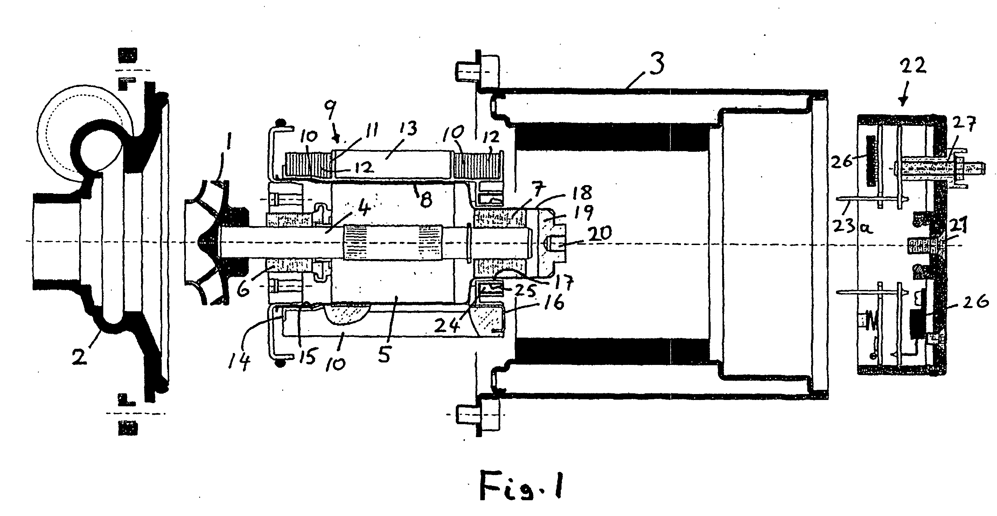

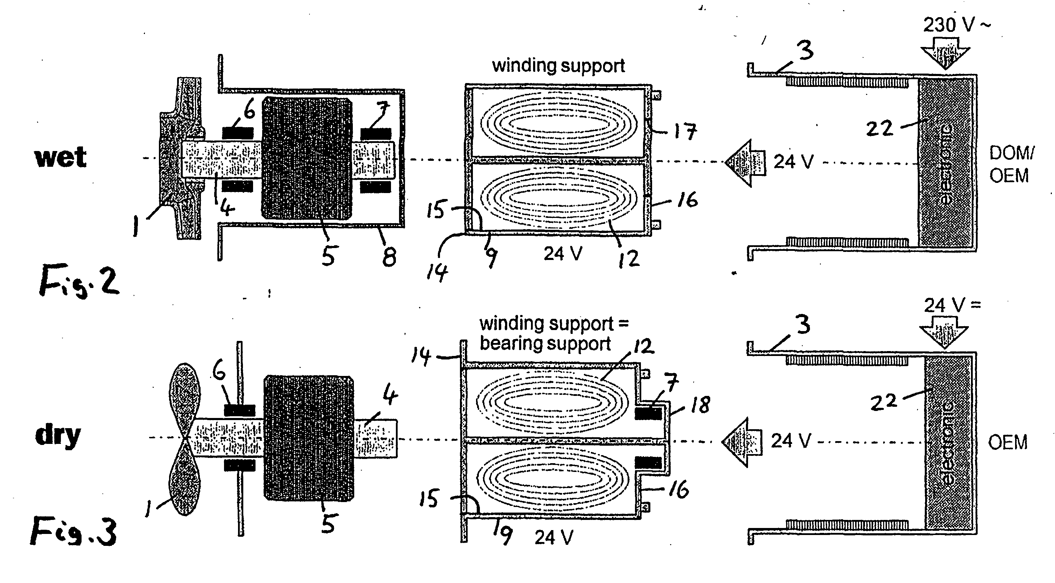

Bei der in Figuren 1 und 2 dargestellten Motorkreiselpumpe liegt das Pumpenlaufrad 1 im inneren eines Pumpengehäuses 2, an dem ein Motorgehäuse 3 angeflanscht ist. Das Pumpenlaufrad 1 sitzt auf dem Ende einer Motorwelle 4, die den Motorenrotor 5 trägt und in Lagern 6,7 gehalten ist.

Motorwelle 4, Rotor 5 und die Lager 6,7 liegen innerhalb eines Spalttopfes 8 auf dessen Außenseite ein Wicklungsträger 9 geschoben ist. Der Wicklungsträger 9 besteht aus Kunstoff oder Metall und besitzt am Umfang achsparallele Stäbe 10, die in regelmäßigen Abständen angeordnet sind. An einigen Stäben 10 insbesondere an jedem zweiten Stab sind längliche achsparallele und nach außen vorstehende Vorsprünge 11 angeformt, auf denen jeweils eine ovale Wicklung 12 mit ihrer inneren länglichen Öffnung von außen insbesondere in radialer Richtung aufgeschoben ist. Hierbei weisen die Vorsprünge 11 nach außen sich öffnende Hohlräume (Vertiefungen) 13 auf, in die ein Führungsfinger für die automatische Wicklungsmontage steckbar ist.

Jeder zweite achsparallele Stab 10, der keinen Vorsprung 11 aufweist bildet jeweils eine zwischen den Wicklungen liegende Trennwand, so daß benachbarte Wicklungen einander nicht berühren können. Hierbei stehen die die Vorsprünge tragenden Stäbe 10, außerhalb des jeweiligen Vorsprungs weniger weit in radialer Richtung nach außen vor als die Stäbe 10, die die Trennwände bilden.

Der in etwa zylindrisch bzw. topfförmig ausgeführte Wicklungsträger 9 besitzt eine erste offene Endwand 14 durch deren mittige Öffnung 15 der Rotor 5 mit Welle 4 und Lagern 6,7 einsteckbar ist. Die gegenüberliegende Endwand 16 des Wicklungsträgers 9 ist teilweise geschlossen, d.h. sie besitzt eine kleinere mittige koaxiale Öffnung 17, in der (entsprechend Figur 1) ein topfförmiger koaxialer Bereich 18 des Spalttopfes 8 hineinragt bzw. hindurchragt, dessen Durchmesser kleiner ist als der übrige Durchmesser des Spalttopfes 8. Im Inneren des Bereiches 18 befindet sich das Lager 7 der Welle 4.

An der äußeren Stirnseite des Bereiches 18, ist ein Befestigungstück 19 innen angeordnet, in dem sich eine sich nach außen öffnende koaxiale Gewindebohrung 20 befindet, in die eine Schraube 21 eines elektrischen Anschlußmoduls 22 eindrehbar ist. Hierbei weist das Motorgehäuse auf der dem Pumpengehäuse 2 abgewandten Seite eine sich zur äußeren Motorgehäusestirnseite sich öffnende Ausnehmung 23 auf, in die das Anschlußmodul 22 vollständig einschiebbar ist. Im eingeschobenen Zustand übergreift das Anschlußmodul 22 den über den Wicklungsträger 9 herausragenden Teil des topfförmigen Bereiches 18 des Spalttopfes 8.

Auf der dem Wicklungsträger 9 zugewandten Seite weist das Anschlußmodul 22 Kontaktteile 23a auf, die als Steckkontakte in Öffnungen 24 an der Endwand 16 des Wicklungsträgers 9 hineinragen. Hierzu bildet die Endwand 16 in dem die mittige Öffnung 17 umgebenden Rand mehrere Öffnungen 24 mit darin einliegenden elektrischen Kontakten 25, die an die Wicklungen angeschlossen sind.

Das Anschlußmodul 22 besitzt darüber hinaus elektronische Bauteile 26 und vorzugsweise einen Stromanschluß 27. Das Anschlußmodul 22 ist damit genauso wie alle übrigen Teile in axialer insbesondere koaxialer Richtung montierbar.

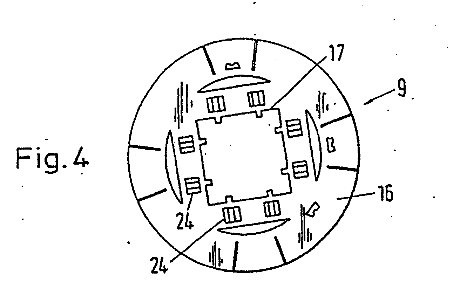

Wird der beschriebene Elektromotor bei einem Lüfter verwendet, so fehlt, wie in Figur 3 dargestellt, der Spalttopf 8. Der Motorenrotor 5 liegt mit seiner Welle 4 im Wicklungsträger 9 ein und das dem Laufrad 1 abgewandte Lager 7 wird nicht vom Spalttopf 8, sondern direkt vom Wicklungsträger 9 dadurch getragen, daß das Lager 7 in der Öffnung 17 der Endwand 16 genauso wie der topfförmige Bereich 18 formschlüssig und/oder kraftschlüssig (klemmend) einliegt. Im übrigen ist beim Ausführungsbeispiel nach Figur 3 der Wicklungsträger 9 gleich oder ähnlich ausgeführt und das Anschlußmodul 22 ist in gleicherweise angeordnet und montierbar.

## Patentansprüche

1. Elektromotor mit einem Wicklungsträger (9) für die Wicklungen des Stators und einem Rotor, wobei der Wicklungsträger einen zylindrischen, mit dem Rotor koaxialen Hohlraum aufweist, der an einer ersten Endseite (14) offen ist, wobei durch die offene Endseite der Rotor (5) in den Hohlraum hineinreicht, und der Hohlraum an der gegenüberliegenden zweiten Endseite (16) eine mit dem Rotor koaxiale Öffnung aufweist, deren Durchmesser kleiner ist als die Öffnung der ersten Endseite (14), **dadurch gekennzeichnet, dass** am Wicklungsträgerumfang achsparallel und in radialer Richtung nach außen abwechslungsweise Vorsprünge (11) und Trennwände in Abständen angeordnet sind, wobei auf jedem Vorsprung jeweils eine Wicklung (12) mit ihrer inneren länglichen Öffnung von außen insbesondere in radialer Richtung aufschiebbar ist, wobei die Vorsprünge in axialer Richtung kürzer sind als die Trennwände, so dass benachbarte Wicklungen einander nicht berühren können, und wobei in die Öffnung mit kleinerem Durchmesser ein Lager (7) für die Rotorwelle (4) oder ein abgestuftes Ende (18) eines Spalttopfes (8) einschiebbar ist.

2. Elektromotor nach Anspruch 1 oder 2, **dadurch gekennzeichnet, dass** der Wicklungsträger (9) die vollständige Statorwicklung trägt.

3. Elektromotor nach Anspruch 1 oder 2, **dadurch gekennzeichnet, dass** die Endseite (16) mit der kleineren Öffnung die elektrischen Anschlüsse (25) für die Enden der Wicklungsdrähte trägt.

4. Elektromotor nach Anspruch 3, **dadurch gekennzeichnet, dass** die Anschlüsse (25) als Steckkontakte ausgebildet sind, in denen Anschlussverbindungen wie die der Motor- und Steuerelektronik und/oder der Netzanschlussverbindung kontaktierbar sind.

5. Elektromotor nach einem der vorherigen Ansprüche, **dadurch gekennzeichnet, dass** ein Motorgehäuse mit einer zur äußeren Stirnseite sich öffnenden Ausnehmung (23), in die von außen koaxial ein elektrisches Anschlussmodul (22) einschiebbar ist, das elektrische Anschlussteile (27) und elektronische Bauteile (26) aufweist.

6. Elektromotor nach einem der vorherigen Ansprüche, **dadurch gekennzeichnet, dass** die Vorsprünge (11) einen nach außen sich öffnenden Hohlraum (13) bilden, in den ein Führungsfinger für die automatische Wicklungsmontage steckbar ist.

7. Elektromotor nach einem der vorherigen Ansprüche, **dadurch gekennzeichnet, dass** der Wicklungsträger aus Kunststoff ist.

## Claims

1. Electric motor, having a winding carrier (9) for the windings of the stator and having a rotor, the winding carrier having a cylindrical cavity which is coaxial with the rotor and is open at a first end side (14), the rotor (5) extending into the cavity through the open end side, and the cavity having an opening at the opposite second end side (16) which is coaxial with the rotor and whose diameter is smaller than the opening in the first end side (14), **characterised in that** projections (11) and partitions are arranged at intervals on the winding carrier periphery axially parallel and radially outwardly, so that a respective winding (12) can be pushed, especially in the radial direction, with its inner longer opening, onto each projection from the outside, the projections being shorter in the radial direction than the partitions so that neighbouring windings cannot come into contact with each other, and so that into the opening of smaller diameter can be inserted a bearing (7) for the rotor shaft (4) or a stepped end (18) of an air gap can (8).

2. Electric motor according to claim 1 or 2, **characterised in that** the winding carrier (9) carries all of the stator winding.

3. Electric motor according to claim 1 or 2, **characterised in that** the end side (16) with the smaller opening carries the electrical contacts (25) for the ends of the wires of the windings.

4. Electric motor according to claim 3, **characterised in that** the contacts (25) are constructed as plug in contacts in which contact connectors such as those of the motor and control electronics and/or the electric mains connection can make contact.

5. Electric motor according to one of the preceding claims, **characterised in that** a motor housing has a recess (23) open at the outer end face into which can be inserted coaxially from the outside an electric contact module (22) that has electric contact elements (27) and electronic components (26).

6. Electric motor according to one of the preceding claims, **characterised in that** the projections (11) form a cavity (13) open to the outside in which can be inserted a guide finger for automated installation of the windings.

7. Electric motor according to one of the preceding claims, **characterised in that** the winding carrier is made of plastics.

## Revendications

1. Moteur électrique avec un support de bobines (9) pour les bobines du stator et un rotor, le support de bobines présentant un volume creux cylindrique, coaxial au rotor, qui est ouvert à une première face d'extrémité (14), le rotor (5) s'étendant à l'intérieur du volume creux à travers la face d'extrémité ouverte et le volume creux présentant à la seconde face d'extrémité (16) opposée une ouverture coaxiale au rotor dont le diamètre est inférieur à l'ouverture de la première face d'extrémité (14),
**caractérisé en ce que** des saillies (11) et des parois de séparation sont disposées alternativement parallèlement à l'axe et en direction radiale vers l'extérieur sur la périphérie du support de bobines, une bobine (12) pouvant respectivement être enfilée par son ouverture intérieure longitudinale depuis l'extérieur, en particulier en direction radiale, sur chaque saillie, les saillies étant plus courtes en direction axiale que les parois de séparation de telle sorte que des bobines adjacentes ne puissent pas se toucher entre elles, et un palier (7) pour l'arbre (4) du rotor ou une extrémité (18) en gradin d'un pot d'entrefer (8) pouvant être introduit par coulissement dans l'ouverture du plus petit diamètre.

2. Moteur électrique selon la revendication 1,
**caractérisé en ce que** le support de bobines (9) porte la bobine statorique entière.

3. Moteur électrique selon la revendication 1 ou 2,
**caractérisé en ce que** la face d'extrémité (16) avec l'ouverture plus petite porte les connexions électriques (25) pour les extrémités des câbles de bobine.

4. Moteur électrique selon la revendication 3,
**caractérisé en ce que** les connexions (25) sont conformées en tant que contacts enfichables dans lesquels des liaisons de connexion, telles que celles de l'électronique du moteur et de commande et/ou de la liaison de connexion au réseau, peuvent être mises en contact.

5. Moteur électrique selon l'une des revendications précédentes,
**caractérisé en ce qu'**il présente un carter de moteur, avec un évidement (23) s'ouvrant vers la face frontale extérieure dans lequel un module de connexion (22) électrique peut être introduit par coulissement coaxialement depuis l'extérieur, lequel présente des pièces de connexion (27) électrique et des composants (26) électroniques.

6. Moteur électrique selon l'une des revendications précédentes,
**caractérisé en ce que** les saillies (11) forment un volume creux (13) s'ouvrant vers l'extérieur dans lequel peut être enfiché un doigt de guidage pour le montage automatique de la bobine.

7. Moteur électrique selon l'une des revendications précédentes,
**caractérisé en ce que** le support de bobines est en matière synthétique.
